# EUROPÄISCHE PATENTSCHRIFT

(11) **EP 2 803 977 B1**
(45) Veröffentlichungstag und Bekanntmachung des Hinweises auf die Patenterteilung: **22.09.2021**
(21) Anmeldenummer: 14167996.9
(22) Anmeldetag: 13.05.2014
(51) Int. Cl.: G01N 21/64, G02B 21/00, G02B 21/16, G02B 21/36, G02B 27/58, H04N 13/20

(54) **Verfahren zur 3D-hochauflösenden Lokalisierungsmikroskopie**
Method for 3D high-resolution localisation microscopy
Procédé de localisation par microscopie 3D à haute résolution

(30) Priorität: 14.05.2013 DE 102013208926
(43) Veröffentlichungstag der Anmeldung: 19.11.2014
(73) Patentinhaber: Carl Zeiss Microscopy GmbH, 07745 Jena (DE)
(72) Erfinder: Ritter, Jörg, 07749 Jena (DE); Siebenmorgen, Jörg, 07743 Jena (DE); Kalkbrenner, Thomas, 07745 Jena (DE)
(74) Vertreter: Meyer, Jork

(56) Entgegenhaltungen:
- DE-A1-102009 060 793
- DE-A1-102010 044 013
- T. VETTENBURG ET AL: "Increasing the resolution of light sheet microscopy in the presence of aberrations", PROCEEDINGS OF SPIE, Bd. 8589, 22. Februar 2013 (2013-02-22), Seite 858912, XP55138377, ISSN: 0277-786X, DOI: 10.1117/12.2003828
- None

## Beschreibung

Die Erfindung bezieht sich auf ein Verfahren zur 3D-hochauflösenden Lokalisierungsmikroskopie, bei dem in einem Anregungsschritt eine Probe mit Anregungsstrahlung beleuchtet wird, um in der Probe Fluoreszenzmarker zum Leuchten anzuregen, in einem Abbildungsschritt die Probe mittels einer Abbildungsoptik längs einer Abbildungsrichtung in ein Einzelbild abgebildet wird, wobei das Einzelbild Abbilder der leuchtenden Fluoreszenzmarker enthält und die Abbildungsoptik eine Fokusebene und eine optische Auflösung aufweist, der Anregungs- und der Abbildungsschritt mehrmals wiederholt werden und so mehrere Einzelbilder erzeugt werden, wobei die Anregungsschritte so ausgeführt werden, dass zumindest für einen Teil der leuchtenden Fluoreszenzmarker deren Abbilder in jedem Einzelbilder isoliert sind, in den erzeugten, mehreren Einzelbildern aus den isolierten Abbildern der leuchtenden Fluoreszenzmarker jeweils eine Ortsangabe des entsprechenden Fluoreszenzmarkers ermittelt wird, die eine Genauigkeit hat, welche über die optische Auflösung hinausgeht, aus den so ermittelten Ortsangaben ein hochaufgelöstes Gesamtbild erzeugt wird.

Im Stand der Technik sind verschiedene Verfahren zur Überwindung der Beugungsgrenze in der Mikroskopie entwickelt worden. Aus der WO 2006/0127692 oder der DE 102006021317 A1 ist ein mit PALM (photo activated localisation microscopy) abgekürztes Verfahren bekannt, das zur Abbildung einer Probe eine Markierungssubstanz verwendet, welche mittels optischer Strahlung aktiviert werden kann, Nur im aktivierten Zustand kann die Markierungssubstanz bestimmte Fluoreszenzstrahlung abgeben. Nicht aktivierte Moleküle der Markierungssubstanz senden auch nach Einstrahlung von Anregungsstrahlung keine oder zumindest keine merkliche Fluoreszenzstrahlung mit den festgelegten Eigenschaften ab. Man bezeichnet deshalb die Aktivierungsstrahlung allgemein als Umschaltsignal. Im PALM-Verfahren wird das Umschaltsignal so aufgebracht, dass zumindest einige der aktivierten Markierungsmoleküle von benachbarten, aktivierten Markierungsmolekülen so beabstandet sind, dass sie gemessen an der optischen Auflösung der Mikroskopie getrennt oder nachträglich durch Bildverarbeitungsverfahren trennbar sind. Man spricht davon, dass Fluoreszenzmarker isoliert werden, und bezeichnet diesen Schnitt auch als Isolierungsschritt. Es genügt dabei, dass eine Teilmenge der Gesamtmenge der Fluoreszenzmarker isoliert ist. Die Probe wird so abgebildet; man erhält ein Einzelbild der Probe, in dem zumindest einige Fluoreszenzmarker isoliert leuchten. Dann wird für jeden Fluoreszenzmarker das Zentrum der registrierten Strahlungsverteilung ermittelt, die auflösungsbegrenzt bedingt natürlich nicht punktförmig ist. Auf diese Weise wird rechnerisch die Lage des Fluoreszenzmarkers mit höherer Genauigkeit lokalisiert, als es die optische Auflösung eigentlich zulässt. Dieser Schritt wird als Lokalisierungsschritt bezeichnet.

Die Schritte der Isolierung und der Lokalisierung werden wiederholt durchgeführt, so dass man mehrere Einzelbilder erhält. Idealerweise ist jeder Fluoreszenzmarker einmal in mindestens einem Einzelbild isoliert. Die aus den Einzelbildern ermittelten Ortsangaben erlauben es, ein Gesamtbild zu erzeugen, das die Ortsangaben der einzelnen Fluoreszenzmarker jeweils mit einer über die optische Auflösung hinausgehenden Genauigkeit enthält. Ein solches Bild, das eine über die optische Auflösung gesteigerte Genauigkeit hat, wird als hochauflösend bezeichnet.

Zum Isolieren der Fluoreszenzmarker nutzt das PALM-Prinzip statistische Effekte aus. Bei einem Fluoreszenzmarker, der durch das Umschaltsignal mit gegebener Intensität zur Fluoreszenzstrahlung aktivierbar ist, kann durch Einstellen der Intensität des Umschaltsignals dafür gesorgt werden, dass die Wahrscheinlichkeit, in einem gegebenen Flächenbereich der Probe vorhandene Fluoreszenzmarker zu aktivieren, so gering ist, dass es ausreichend Teilbereiche in der abgebildeten Probe gibt, in denen innerhalb der optischen Auflösung zumindest einige isolierte Fluoreszenzmarker zur Abgabe von Fluoreszenzstrahlung angeregt werden können. Die Anregung der derart aktivierten Probe führt dann zu isoliert leuchtenden Fluoreszenzmarkern.

Das PALM-Prinzip wurde hinsichtlich der Aktivierung, d. h. der Aufbringung des Umschaltsignals weitergebildet. So ist beispielsweise bei Molekülen, die einen langlebigen, nicht fluoreszierenden Zustand und einen kurzlebigen, fluoreszierenden Zustand aufweisen, ein separates Aktivieren mit spektral von der Anregungsstrahlung abweichender Aktivierungsstrahlung gar nicht erforderlich. Vielmehr wird die Probe zuerst mit Anregungsstrahlung hoher Intensität so beleuchtet, dass der weit überwiegende Anteil der Moleküle in den nicht fluoreszenzfähigen, langlebigen Zustand (z. B. einen Triplet-Zustand) gebracht wird. Die verbliebenen, dann noch fluoreszierenden Moleküle sind dann zumindest zum Teil isoliert.

Das PALM-Prinzip hat in der Fachliteratur mittlerweile auch andere Abkürzungen erhalten, wie beispielsweise STORM etc. In dieser Beschreibung wird die Abkürzung PALM zur Identifizierung aller Mikroskopietechniken verwendet, die eine Hochauflösung erreichen, indem Fluoreszenzmarker zuerst isoliert und dann lokalisiert werden. Das PALM-Verfahren hat den Vorteil, dass für die Anregung keine hohe Ortsauflösung benötigt wird. Eine einfache Weitfeldbeleuchtung ist möglich.

Das PALM-Prinzip erreicht die Hochauflösung in 2D bzw. lateral, d. h. quer zur Abbildungsrichtung, da die Lokalisierung nur für Fluoreszenzmarker erfolgen kann, die in Projektion auf ein senkrecht zur Abbildungsrichtung liegenden Ebene isoliert sind. Fluoreszenzmarker, die längs der Abbildungsrichtung, also in Tiefenrichtung, hintereinander liegen, können mit dem PALM-Prinzip per se nicht unterschieden werden. Die ersten experimentellen Realisierungen des PALM-Verfahrens verwendeten deshalb eine TIRF-Beleuchtung, um sicherzustellen, dass lediglich aus einem scharf definierten Tiefenbereich, der deutlich geringer ist als die Tiefenschärfe der verwendeten Abbildungsoptik, Fluoreszenzmarker angeregt werden.

Der Stand der Technik hat zwischenzeitlich weitere Verfahren und Ansätze hervorgebracht, welche eine 3D-Lokalisierungsmikroskopie erreichen, bei der Fluoreszenzmarker auch in der dritten Raumrichtung, also bezogen auf die Abbildung in Tiefenrichtung, isoliert und lokalisiert werden.

Aus der DE 10 2009 060 793 A1 sind ein Mikroskop und ein Verfahren bekannt, mittels denen ein Objekt hochauflösend abgebildet und eine zwei- beziehungsweise dreidimensionale Positionsbestimmung ausgeführt werden kann. Aus der Veröffentlichung von Vettenburg et al. (2013; Proceedings of SPIE 8589: 85912-1 - 858912-6) sind Phasenmodulationen bekannt, die eine Reduzierung probenbedingter Abbildungsfehler insbesondere von Proben mit sich ändernden optischen Eigenschaften erlauben. Eine Möglichkeit der Mikroskopie mit gesteigerter Tiefenauflösung ist in der DE 10 2010 044 013 A1 angegeben.

Die Publikation B. Huang et al., Science 319, Seite 810, 2008, beschreibt für das PALM-Prinzip einen Abbildungsstrahlengang, in dem eine schwache Zylinderlinse liegt, die zu einer gezielten astigmatischen Verzeichnung im Bild führt. Dadurch wird das Abbild jedes Fluoreszenzmarkers auf der Kamera elliptisch verzerrt, sobald sich der Fluoreszenzmarker ober- oder unterhalb der Fokusebene befindet, welche einen Symmetriepunkt der Punktbildverwaschungsfunktion der Abbildung der Probe darstellt. Aus der Orientierung und der Stärke der Verzerrung lässt sich eine Information über die Tiefenlage des leuchtenden Fluoreszenzmarkers gewinnen. Ein Nachteil dieses Verfahrens liegt darin, dass bei einem molekularen Dipol auch dessen lokale Umgebung und Orientierung zu einer Verzerrung des Bildes des leuchtenden Fluoreszenzmarkers führen kann, die allerdings mit der Tiefenlage nichts zu tun hat. Solche leuchtende Fluoreszenzmarker erhalten dann, je nach ihrer räumlichen Lage, einen falschen Tiefenwert.

Einen anderen Ansatz verfolgt die Veröffentlichung von Shtengel et al, PNAS 106, Seite 3125, 2009. Dort werden Photonen, welche die leuchtenden Fluoreszenzmarker emittieren, mit sich selbst zur Interferenz gebracht. Dazu werden zwei, in 4π-Konflguration montierte Objekive verwendet, welche die leuchtenden Fluoreszenzmarker gleichzeitig beobachten. Mittels eines speziellen 3-Wege-Strahlteilers wird die Strahlung aus den derart erhaltenen Teilstrahlgängen zur Interferenz gebracht. Jedes der erhaltenen Bilder wird mit einer Kamera detektiert, und die Intensitätsverhältnisse der Bilder geben Aufschluss über die Tiefenlage.

In der Veröffentlichung Toprak et al., Nanolet. 7, Seiten 2043-2045, 2007, sowie gemäß Juette et al., Nature Methods 5, Seite 527, 2008, wird ein 1:1-Strahlteiler in den Abbildungsstrahlengang eingebaut, der das Bild der Probe in zwei Teilbilder aufspaltet, die eigenständig detektiert werden. Zusätzlich wird in einem der Teilstrahlengänge nach dem Strahlteiler eine optische Weglängendifferenz dergestalt eingeführt, dass die beiden Teilstrahlengänge zwei Objektebenen abbilden, die etwa im die halbe oder ganze optische Mindestauflösung in Tiefenrichtung beabstandet sind. Die Tiefenlage eines Fluoreszenzmarkers, der zwischen diesen beiden Objektebenen liegt, erhält man aus der Analyse der zwei Teilbilder dieses Fluoreszenzmarkers (z. B. hinsichtlich der Breite der Punktbildverwaschung). Das Verfahren erfordert zwei hochaufgelöste Teilbilder und eine subpixelgenaue Überlagerung dieser beiden Teilbilder. Eine Weiterbildung dieses Ansatzes, welche den Justierungsaufwand drastisch herabsetzt, ist aus der DE 102009060490 A1 bekannt.

Ein Prinzip der Tiefenauflösung bei der Lokalisierungsmikroskopie verfolgt die bewusste Verzerrung der Punktbildverwaschungsfunktion (nachfolgend auch als PSF abgekürzt) der Abbildung. Ein solcher Ansatz ist beispielsweise in der WO 2012/039636 beschrieben, die bei der Abbildung der Probe so modifiziert, dass eine Bildverzeichnung entsteht, welche tiefenlagenabhängig ist. Beispielsweise wird die idealerweise ellipsoidförmige Punktbildverwaschungsfunktion in eine Art Helixstruktur modifiziert, so dass für die Abbildung eines leuchtenden Punktes anstelle eines Beugungsscheibchens zwei nebeneinanderliegende Lappen entstehen, deren Relativlage von der Tiefenlage des abgebildeten leuchtenden Punktes abhängt.

Ein weiteres Prinzip, eine Tiefeninformation bei der für die 3D-Lokalisierungsmikroskopie zu gewinnen, findet sich in der DE 102010044013 A1. Sie verwendet für die Anregungs- und/oder Umschaltstrahlung die sogenannte Lichtblattbeleuchtung, die beispielsweise in der Veröffentlichung P. Keller und E. Stelzer, "Quantitative In Vivo Imaging of Entire Embryos with Digital Scanned Laser Light Sheet Fluorescence Microscopy", Current Opinion in Neurobiology, 2009, Vol. 19, Seiten 1-9, beschrieben sind. Die Probe wird nacheinander durch zwei axial gegeneinander versetzte, jedoch überlappende Lichtblätter beleuchtet. Moleküle, die in beiden Lichtblattpositionen Fluoreszenzstrahlung abstrahlen, müssen zwangsläufig im Überlappbereich der beiden Lichtblattpositionen liegen. Es wird deshalb eine geeignete Filterung ausgeführt. Auf diese Weise kann die Tiefenauswahl deutlich über die Dicke des Lichtblattes hinaus gesteigert werden. Die Dicke des Überlappbereiches ist maßgebend für die Filterung. Nachteilig an diesem Ansatz ist es, dass für die Lokalisierung die doppelte Anzahl an Einzelbildern aufgenommen werden muss, nämlich für jede Lichtblattposition die Anzahl an Einzelbildern, die man bei der herkömmlichen PALM-Abbildung benötigen würde. Auch ist das präzise Einstellen des Versatzes der Lichtblätter und insbesondere die Reproduzierbarkeit der Verstellung wesentlich für die Dicke des Überlappbereiches und damit für die Tiefenauflösung. Schließlich kann innerhalb des herausgefilterten Überlappbereiches in der Regel keine sinnvolle Auflösung mehr erfolgen. Der Überlappbereich definiert damit quasi eine Messunschärfe hinsichtlich der Tiefenangabe. Fluoreszenzmarker, die außerhalb des Überlappbereiches liegen, können hinsichtlich ihrer Tiefenlage nicht spezifiziert werden, so dass eine Erfassung eines Bereiches, der größer ist als der Überlappbereich, letztlich ein Durchrastern der Probe erfordert.

Bei der PAL-Mikroskopie kann zudem eine unerwünschte Bestrahlung der Fluoreszenzmarker nachteilig sein, da die Fluoreszenzmarker oftmals nur eine sehr begrenzte Anzahl an Aktivierungs- und/oder Anregungszyklen durchlaufen können. Unerwünscht ist in diesem Sinne jede Bestrahlung, die nicht für eine hochauflösende Abbildung ausgenutzt wird. Auch hier ist das Prinzip der überlappenden Lichtblätter verbesserungsfähig, da dort Fluoreszenzmarker bestrahlt werden, deren Tiefenlage nicht erfasst wird, weil sie nämlich außerhalb des Überlappbereiches liegen.

Der Erfindung liegt die Aufgabe zugrunde, das Mikroskopieverfahren der DE 102010044013 A1 dahingehend weiterzubilden, dass innerhalb eines größeren Tiefenbereiches eine Tiefenangabe ermittelt werden kann, die nicht darauf beschränkt ist, ob ein Fluoreszenzmolekül innerhalb eines vorgegebenen Tiefenbereiches liegt oder nicht. Der Erfindung liegt weiter die Aufgabe zugrunde, ein tiefenauflösendes Mikroskopieverfahren anzugeben, das unerwünschte Beleuchtung von Fluoreszenzmarkern möglichst vermeidet.

Die Aufgabe wird erfindungsgemäß gelöst durch ein Verfahren der eingangs genannten Art, dass dadurch gekennzeichnet ist, dass die Anregungsstrahlung in die Probe als ein erstes Lichtblatt eingestrahlt wird, das längs der Abbildungsrichtung eine Intensitätsverteilung hat, die zur Fokusebene asymmetrisch ist, in den Einzelbildern die isolierten Abbilder der leuchtenden Fluoreszenzmarker hinsichtlich ihrer Umrissform analysiert werden und aus der Umrissform eine Angabe über den Abstand des entsprechenden Fluoreszenzmarkers von der Fokalebene abgeleitet wird.

Unter einem Fluoreszenzmarker wird in dieser Beschreibung ein Fluoreszenzemitter verstanden, der für die Lokalisierungsmikroskopie tauglich ist, also dazu eingesetzt werden kann, einzelne Fluoreszenzmarker bezogen auf die optische Auflösung isoliert zum Leuchten zu bringen. Der Begriff Fluoreszenzmarker soll dabei sowohl Fälle umfassen, in denen Strukturen in einer Probe mit entsprechenden Stoffen markiert werden, als auch Fälle, in denen die Probe bereits von sich aus die geeigneten Fluoreszenzeigenschaften hat.

Die Erfindung verwendet die Lichtblattmikroskopie zur Erzeugung einer von der Tiefenrichtung abhängigen Punktbildverwaschungsfunktion. Sie setzt also das in der DE 102010044013 A1 verwendete Lichtblatt nun dazu ein, die Abbildung so zu gestalten, dass die Punktbildverwaschungsfunktion von der Tiefenrichtung abhängt. Dies sei auch als axiale Abhängigkeit der Punktbildverwaschungsfunktion (PSF) bezeichnet. Dadurch, dass das Lichtblatt hinsichtlich seiner Intensitätsverteilung zur Fokusebene asymmetrisch ist, wird eine axiale Abhängigkeit der Punktbildverwaschungsfunktion erzeugt. Die Punktbildverwaschungsfunktion ist bei der Lichtblattmikroskopie nach Erkenntnis der Erfinder nur dann axial symmetrisch, wenn das Lichtblatt symmetrisch zur Fokusebene liegt. Ist das Lichtblatt hingegen axial zur Fokusebene asymmetrisch, beispielsweise verschoben, findet eine Symmetriebrechung statt. Da die Punktbildverwaschungsfunktion eines Lichtblattmikroskops immer eine Kombination aus Anregung und Detektion ist, verformt eine Asymmetrie des Lichtblattes bezogen auf die Fokusebene auch die Punktbildverwaschungsfunktion asymmetrisch. Der Schwerpunkt der Intensitätsverteilung der Punktbildverwaschungsfunktion verschiebt sich dabei genau in die Richtung, in die auch der Schwerpunkt des Lichtblattes gegenüber der Fokusebene asymmetrisch ist, beispielsweise in die ein Lichtblatt gegenüber der Fokusebene versetzt ist Aufgrund dieser Asymmetrie werden die isolierten Abbilder der leuchtenden Fluoreszenzmarker hinsichtlich ihrer Umrissform analysiert und daraus die axiale Position, d. h. die Tiefenlage des Fluoreszenzmarkers eindeutig bestimmt. Dazu wird die äußere Form, also die Umrissform des isolierten Abbildes jedes leuchtenden Fluoreszenzmarkers analysiert. Bevorzugt wird bei dieser Analyse die Breite der Intensitätsverteilung der isolierten Abbilder ausgewertet.

Je größer die Asymmetrie der Intensitätsverteilung des Lichtblattes bezogen auf die Fokusebene ist, desto einfacher ist die axiale Lokalisierung des Fluoreszenzmarkers, da die Asymmetrie der Punktbildverwaschungsfunktion mit der Asymmetrie der Intensitätsverteilung des Lichtblattes zur Fokusebene steigt.

Es können zur Bildanalyse prinzipiell dieselben Algorithmen zur Anwendung kommen, die im Stand der Technik anderweitig zur Auswertung asymmetrischer Punktbildverwaschungsfunktionen verwendet werden. Beispielsweise die Algorithmen, die aus der zitierten Veröffentlichung von Juette et al. bekannt sind. Üblicherweise ist Ausgangspunkt für solche Algorithmen die zuvor bestimmte Punktbildverwaschungsfunktion der Abbildungsoptik. Sie kann theoretisch oder experimentell anhand leuchtender Punkte bekannter Abmaße ermittelt werden, wie auch aus der bereits genannten WO 2012/039636 bekannt ist.

Für das erfindungsgemäße Verfahren ist es vorteilhaft, im Abbildungsschritt die Probe auf einen Detektor abzubilden, der in einer zur Fokusebene konjugierten Ebene liegt. Dann ist die Asymmetrie der Punktbildverwaschungsfunktion für eine gegebene Konfiguration des Lichtblattes maximal.

Die zur Fokusebene asymmetrische Intensitätsverteilung des Lichtblattes kann dadurch erreicht werden, dass ein symmetrisches Lichtblatt erzeugt wird, was technisch besonders einfach ist, und so angeordnet ist, dass das Maximum der Intensitätsverteilung außerhalb der Fokusebene liegt. Dies kann natürlich auch für eine nicht symmetrische Intensitätsverteilung vorgenommen werden.

Eine weitere Möglichkeit der Symmetriebrechung liegt in der Beleuchtung nicht nur mit dem ersten sondern auch mit einem zweiten Lichtblatt und der Verwendung von zwei Detektoren, auf die im Abbildungsschritt die Probe abgebildet wird, wobei einer der Detektoren vor einer Ebene liegt, welche zur Fokalebene konjugiert ist, und der andere hinter einer Ebene, welcher zur Fokalebene konjugiert ist.

Erstes und zweites Lichtblatt können dann sogar zueinander symmetrisch zur Fokusebene versetzt sein. Jeweils für sich betrachtet sind sie asymmetrisch zur Fokusebene. Die Punktbildverwaschungsfunktion ist in diesem Fall für die Gesamtanalyse dann zwar symmetrisch, aber durch die Zuordnung der Kameras zu den Ebenen ober- bzw. unterhalb der zur Fokusebene konjugierten Ebene ist eine eindeutige axiale Lokalisation wieder möglich. Gleichzeitig kann ein größerer axialer Bereich beobachtet werden.

Für diese beiden Ausgestaltungen erreicht man eine besonders hohe Photonenausbeute, wenn man die Abbildungsoptik so ausgestaltet, dass sie zwei gegenüberliegende Detektionsobjektive hat. Man benötigt zwar dann zwei komplette Detektionsstrahlengänge, vermeidet jedoch, dass die durch das Objektiv detektierten Photonen durch einen Strahlteiler auf die zwei Detektoren aufgeteilt werden müssen, wodurch pro Kamera nur die Hälfte der Photonen zur Bilderzeugung genutzt würde.

Eine asymmetrische Punktbildverwaschungsfunktion kann mit mehreren Lichtblättern auch dadurch erzeugt werden, dass ein Lichtblatt näher an die Fokusebene liegt, als das andere, ohne dass die Lichtblätter sich überlappen. Der Begriff "überlappen" ist dabei auf einen vorgegebenen Intensitätsabfall bezogen, um die Grenze des Lichtblattes zu definieren. Eine übliche Grenze ist beispielsweise ein Intensitätsabfall auf 1/e. Andere Definitionen sind gleichermaßen möglich. Beispielsweise liegt das zweite Lichtblatt in der Fokusebene und das erste Lichtblatt nicht überlappend über oder unter der Fokusebene. So erhält man eine asymmetrische Punktbildverwaschungsfunktion, die in Tiefenrichtung weiter ausgedehnt ist, wodurch die axiale Lokalisierung über einen größeren Tiefenbereich erfolgt. Natürlich können für diese Variante auch noch weitere Lichtblätter verwendet werden. Der Unterschied zum genannten Prinzip mit überlappenden Lichtblättern liegt darin, dass durch die Analyse der Umrissform die Detektion nicht auf den Überlappbereich eingeschränkt ist und vor allem keine Filterung auf den Überlappbereich erfolgt.

Ein weiterer Unterschied zum Konzept der DE 102010044013 A1 liegt darin, dass alle in der Erfindung verwendeten Lichtblätter bezogen auf die Detektionsdauer eines Einzelbildes gleichzeitig eingestrahlt werden und nicht wechselnd, wie es für die Filterung erforderlich wäre. Den gleichen Effekt kann man auch erzielen, indem man nur mit dem ersten Lichtblatt beleuchtet, und eine Abbildungsoptik verwendet, die zwei gegenüberliegende Detektionsobjektive und nachfolgende Detektionsstrahlengänge, d. h. Detektoren hat. Wichtig ist hier, dass die Fokusebenen der beiden Detektionsobjektive nicht zusammenfallen.

Neben geometrischen Möglichkeiten, eine asymmetrische PSF zu erzeugen, kann in einer Ausführungsform dazu auch die Wellenlänge verwendet werden. Beleuchtet man die Probe mit dem ersten und mit einem zweiten Lichtblatt und detektiert die Strahlung mit der Abbildungsoptik in zwei spektral getrennten Kanälen, ist jeder Farbkanal einem der Lichtblätter zugeordnet, was die eindeutige axiale Auflösung erlaubt. Voraussetzung ist jedoch, dass die Fluoreszenzmarker zwei spektral unterschiedliche Spezies umfassen oder zwei spektral unterschiedliche Anregungs-und Emissionsspektren haben.

Verwendet man mehrere Lichtblätter ist es von Vorteil, wenn diese in axialer Richtung möglichst nahtlos aneinander folgen. Es ist deshalb bevorzugt, dass bei der Verwendung mindestens eines zweiten Lichtblattes die Lichtblätter in Abbildungsrichtung um eine halbe Lichtblattdicke gegeneinander versetzt sind.

Die Erfindung wird nachfolgend unter Bezugnahme auf die Zeichnung beispielhalber noch näher erläutert. In der Zeichnung zeigt:
- Fig. 1: eine perspektivische Schemadarstellung eines Mikroskops zur 3D-hochauflösenden Lokalisierungsfluoreszenzmikroskopie, das als Weiterbildung eines Lichtblattmikroskops ausgeführt ist,
- Fig. 2 und 3: Schemadarstellungen zur Verdeutlichung der Lage des Lichtblattes im Mikroskop der Fig. 1 gegenüber der Fokusebene (obere Teile der Fig. 2 und 3) sowie der damit erzeugten Punktbildverwaschungsfunktion (jeweils unterer Teil der Figur),
- Fig. 4: eine Darstellung ähnlich dem oberen Teil der Fig. 3, wobei allerdings schematisch eine Intensitätsverteilung des Lichtblatts eingetragen ist,
- Fig. 5a und b: die Auswirkung einer asymmetrischen Punktbildverwaschungsfunktion gemäß dem unteren Teil der Fig. 3 (entsprechend Fig. 5a) auf die Größe von Beugungsscheibchen in der Lokalisierungsmikroskopie (Fig. 5b),
- Fig. 6: eine abgewandelte Bauweise des Lokalisierungsmikroskops der Fig. 1 in einer schematischen Schnittdarstellung, wobei zwei Lichtblätter verwendet werden,
- Fig. 7: eine Darstellung ähnlich der Fig. 4, jedoch für das Mikroskop der Fig. 6,
- Fig. 8: eine Darstellung ähnlich der Fig. 6 für eine weitere Abwandlung eines Lokalisierungsmikroskops mit zwei Lichtblättern,
- Fig. 9: eine Darstellung entsprechend der Fig. 7, jedoch für das Mikroskop der Fig. 8, und
- Fig. 10: eine Darstellung ähnlich der Fig. 6, für eine weitere Ausführungsform eines Lichtblattmikroskops, das ebenfalls mit zwei unterschiedlichen Lichtblättern arbeitet.

Elemente, die sich funktionell oder strukturell in den unterschiedlichen Figuren entsprechen, sind durchgängig mit denselben Bezugszeichen versehen, um eine Beschreibungswiederholung zu vermeiden.

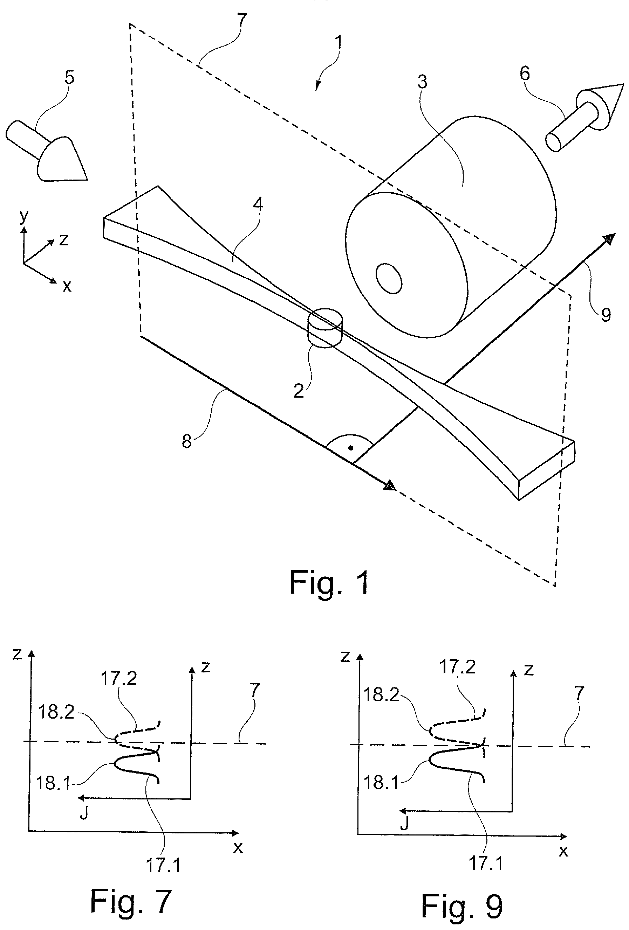

Fig. 1 zeigt schematisch ein Mikroskop 1, das eine Probe 2 zur Fluoreszenzstrahlung anregt und abbildet. Das Mikroskop 1 ist zur Ausführung des PALM-Verfahrens ausgebildet. Die Probe 2 wird im Weitfeld mit einem Objektiv 3 auf einen (in Fig. 1 nicht weiter eingezeichneten) Detektor abgebildet. Die Anregung und/oder Aktivierung der Fluoreszenzstrahlung in der Probe 2 erfolgt mit einem Lichtblatt 4, in dem Aktivierungs- und/oder Anregungsstrahlung verläuft, die von einer Anregungseinrichtung 5 kommt. In der nachfolgenden Beschreibung wird exemplarisch und nicht einschränkend davon ausgegangen, daß Aktivierung und Anregung mit Strahlung derselben Wellenlänge durchgeführt wird, wie dies vorgehend im einleitenden Teil der Beschreibung am Beispiel von Molekülen, die einen langlebigen, nicht fluoreszierenden Zustand und einen kurzlebigen, fluoreszierenden Zustand aufweisen, beschrieben wurde. Es ist deshalb auch nachfolgend teilweise nur von Anregungsstrahlung die Rede, obwohl damit auch die Umschaltstrahlung gemeint sein kann.

Die Probe 2 wird durch das Objektiv 3 auf eine Detektionseinrichtung 6 abgebildet. Das Objektiv 3 legt dabei eine Fokusebene 7 fest, die auf bekannte Weise von einem Tiefenschärfenbereich umgeben ist, der von der konkreten Ausgestaltung des Objektivs 3 und der Detektionseinrichtung 6 abhängt.

Wesentlich für die Ausgestaltung des Mikroskops 1 als Lichtblattmikroskop ist es, dass die Anregung der Probe 2 durch das Lichtblatt 4 entlang einer Anregungsrichtung 8 erfolgt, welche im wesentlichen senkrecht zu einer Abbildungsrichtung 9 liegt, längs der die Probe 2 abgebildet wird. Dies ist charakteristisch für die Lichtblattmikroskopie, bei der die Beleuchtungsrichtung quer zur Abbildungsrichtung liegt, in der Regel senkrecht dazu steht.

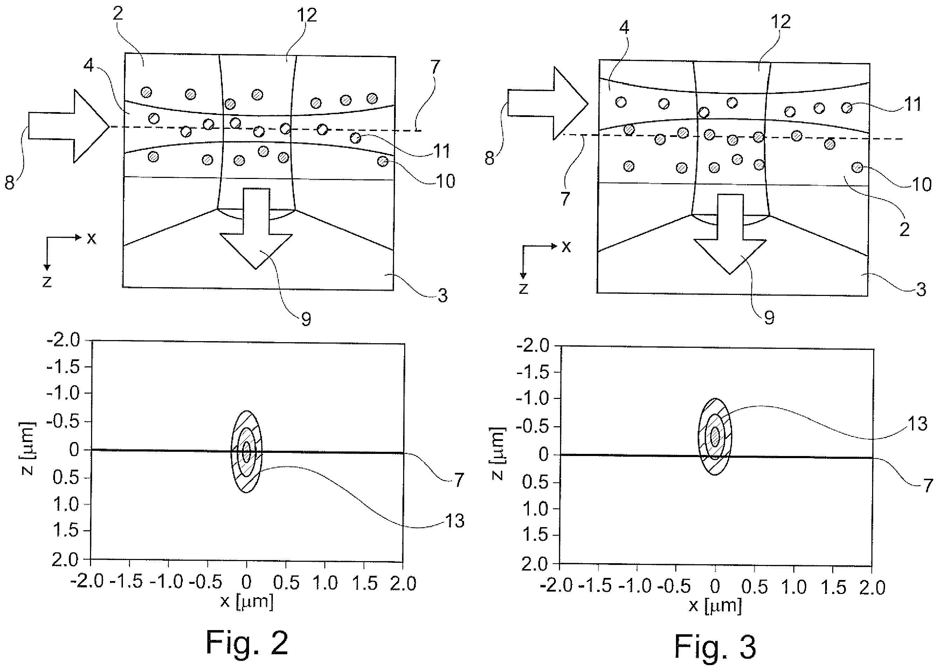

Für das Mikroskop der Fig. 1 ist das Lichtblatt 4 asymmetrisch zur Fokusebene 7. Die Wirkung dieser Asymmetrie zeigen die Fig. 2 und 3. Jede dieser Figuren enthält zwei Teile. In einem oberen Teil ist in einer schematischen Schnittdarstellung der Einfall des Lichtblatts 4 in die Probe 2 und die Abbildung leuchtender Fluoreszenzmarker in der Probe 2 dargestellt. Im darunterliegenden Teil der Figuren ist jeweils ein Schnitt durch die Punktbildverwaschungsfunktion in der x/z-Ebene dargestellt, die auch im oberen Teil der jeweiligen Figur als Schnittebene gewählt ist.

Fig. 2 zeigt die Verhältnisse beim Stand der Technik, wenn das Lichtblatt 4 symmetrisch zur Fokusebene 7 liegt. In der Darstellung der Fig. 2 und 3 sind nichtleuchtende Fluoreszenzmarker 10 sowie leuchtende Fluoreszenzmarker 11 eingetragen. Diese liegen aufgrund des PALM-Prinzips natürlich nur im vom Lichtblatt 4 durchstrahlten Volumen der Probe 2 vor. Im Volumen der Probe 2 außerhalb des Lichtblattes 4 sind die Fluoreszenzmarker 10 nicht angeregt.

Der untere Teil der Fig. 2 verdeutlicht die PSF, die bei diesem Aufbau erhalten wird. Sie ist sowohl hinsichtlich ihrer Umrissform 13 als auch hinsichtlich ihrer Intensitätsverteilung symmetrisch zur Fokusebene 7.

Diese Verhältnisse ändern sich, wenn das Lichtblatt 4 asymmetrisch zur Fokusebene 7 eingestrahlt wird, wie es Fig. 3 zeigt. Hier liegt das Lichtblatt 4 oberhalb der Fokusebene 7. Dass es bezogen auf seine Mittelebene symmetrisch ist, ist lediglich exemplarisch und nicht zwingend. Wesentlich ist, dass es bezogen auf die Fokusebene 7 asymmetrisch ist. Durch diese Asymmetrie des Lichtblatts 4 gegenüber der Fokusebene 7 wird auch die PSF asymmetrisch, was die asymmetrische Umrissform 13 des unten Teils der Fig. 3 zeigt. Die PSF ist sowohl in ihrer Umrissform 13 gegenüber der Fokusebene 7 verschoben, als auch in ihrer Intensitätsverteilung.

Diese asymmetrische PSF wird im Mikroskopieverfahren, das mit dem Mikroskop der Fig. 1 ausgeführt wird, zur Tiefenauflösung beim PALM-Prinzip, also zur 3D-Lokalisierungsmikroskopie ausgenützt.

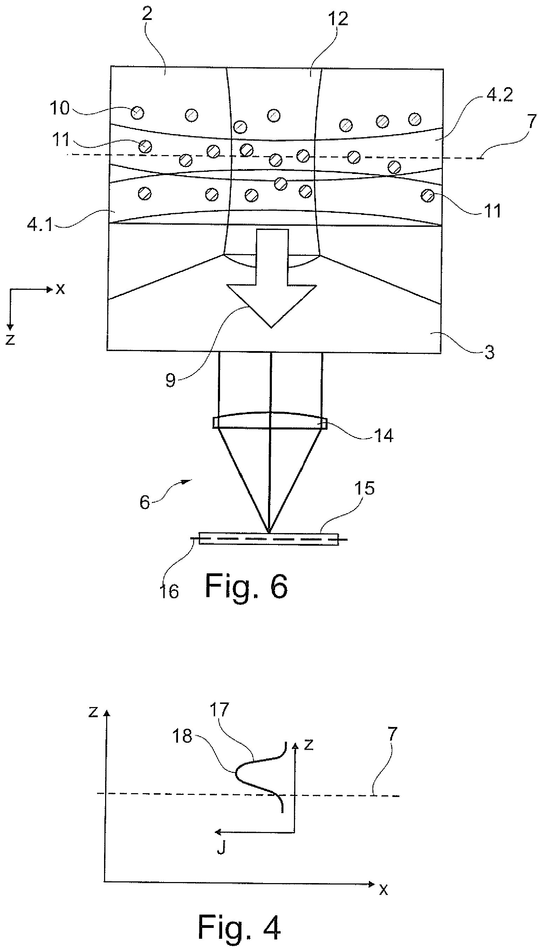

Fig. 4 zeigt schematisch eine Schnittdarstellung ähnlich dem oberen bzw. unteren Teil der Fig. 3, d. h. einen Schnitt in der x/z-Ebene. Hier ist der Intensitätsverlauf für das Lichtblatt 4 eingetragen. Man sieht, dass das Lichtblatt 4 eine Intensitätsverteilung 17 hat, die asymmetrisch zur Fokusebene 7 liegt. Sie ist zwar in sich symmetrisch, ein Maximum 18 der Intensitätsverteilung 17 liegt jedoch außerhalb der Fokusebene 7. Damit wird die im unteren Teil der Fig. 3 dargestellte asymmetrische PSF bewirkt. Eine solche asymmetrische PSF kann man in einer Ausführungsform auch erhalten, in der die Intensitätsverteilung 17 selbst asymmetrisch ist

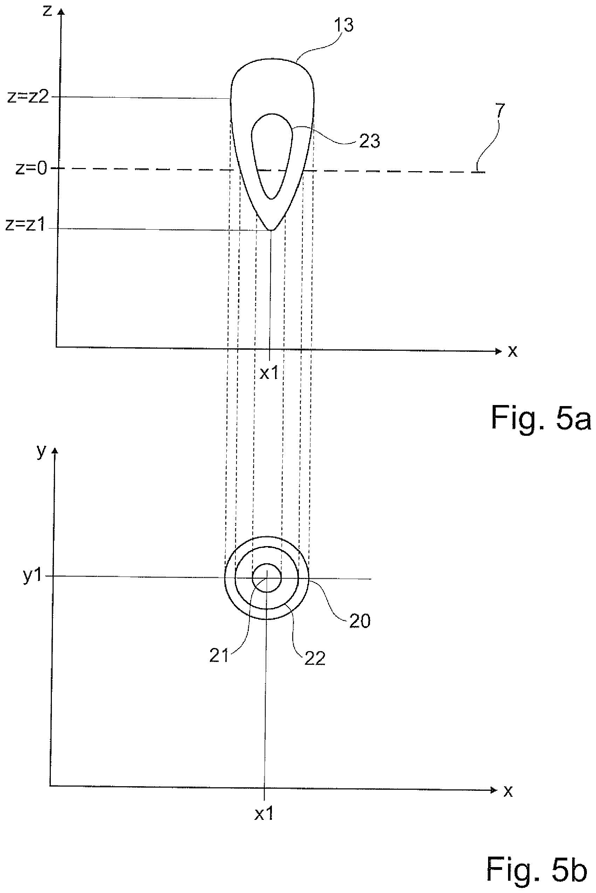

In der 3D-Lokalisierungsmikroskopie wird die Probe in mehreren Einzelbildern abgebildet, wobei die Parameter der Erzeugung dieser Einzelbilder auf bekannte Weise so gestaltet werden, dass zumindest einige der leuchtenden Fluoreszenzmarker 11 im Einzelbild bezogen auf die optische Auflösung, welche im wesentlichen durch das Objektiv 3 und die Detektionseinrichtung 6 vorgegeben sind, isoliert sind. Die Umrissform jedes isolierten Fluoreszenzmarkers hängt nun aufgrund der Asymmetrie der PSF von der Tiefenlage des leuchtenden Fluoreszenzmarkers 11 ab. Dies veranschaulichen die Fig. 5a und 5b. Fig. 5a zeigt die asymmetrische PSF in der x/z-Ebene. Sie ist asymmetrisch zur Fokusebene 7. Die leuchtenden Fluoreszenzmarker werden in eine senkrecht zur y/z-liegende Ebene abgebildet, die in üblichen kartesischen Angaben und entsprechend des Eintrages in Fig. 1 eine x/y-Ebene ist.

Die Umrissform eines abgebildeten Fluoreszenzmarkers hängt von der z-Koordinate ab, da die Abbildung letztlich einen Schnitt durch die PSF der Fig. 5a darstellt. Das Ergebnis dieses Schnittes zeigt Fig. 5b für drei verschiedene z-Koordinaten. Mit zunehmender z-Koordinate steigt der Durchmesser der in Fig. 5b exemplarisch als kreisförmig eingezeichneten Umrissform. Je nach Tiefenlage hat das Beugungsscheibchen 20 einen anderen Durchmesser 22. Das Zentrum 21 des Beugungsscheibchens liefert die x- und y-Koordinate des Ortes des leuchtenden Fluoreszenzmarkers. Aus dem Durchmesser 22 der Umrissform wird die z-Koordinate abgeleitet. Dazu wird, wie bereits im allgemeinen Teil der Beschreibung erläutert, die tatsächliche Umrissform 13 der PSF durch Simulationen und/oder Vermessung hinsichtlich ihrer Lokalisierung und ihrer Ausmessung bekannter Punktemitter ermittelt.

Die Darstellung der Fig. 5a zeigt, dass es je nach Asymmetrie der PSF Fälle geben kann, in denen der Durchmesser 22, also die Umrissform des Beugungsscheibchens 20 noch keine eindeutige Tiefenzuordnung erlaubt. So könnte beispielsweise eine oberhalb der Position z2 liegende Stelle möglicherweise einen Durchmesser 22 für das Beugungsscheibchen 20 liefern, der in etwa dem Durchmesser für die Tiefenposition z1 entspricht. Eine bevorzugte Ausführungsform sieht deshalb vor, dass zusätzlich zur Umrissform, beispielsweise des Durchmessers 22 auch noch die Helligkeitsverteilung des Beugungsscheibchens 20 ausgewertet wird. Fig. 5a zeigt, dass hiermit in der Regel eine eindeutige Zuweisung der Tiefenlage aus der Analyse des Beugungsscheibchens 20 erfolgen kann, da auch die Intensitätsverteilung 23 der PSF asymmetrisch ist.

Bevorzugt wird diese asymmetrische Intensitätsverteilung im Inneren des Umrisses 13 der PSF auch bei der Bestimmung des Zentrums 21 berücksichtigt.

Fig. 6 zeigt eine Weiterbildung des Mikroskops der Fig. 1 bzw. der Beleuchtungs- und Detektionssituation der Fig. 3/4, bei der zusätzlich zum asymmetrischen ersten Lichtblatt, das in Fig. 6 das Bezugszeichen 4.1 erhielt, ein zweites Lichtblatt 4.2 eingestrahlt wird, das in der Ausführungsform der Fig. 6 exemplarisch zur Fokusebene 7 liegt. Die derart beleuchtete Probe 2 wird in der Detektionseinrichtung 6 über eine Tubuslinse 4 auf einen Detektor 15 abgebildet, der in einer zur Fokusebene 7 konjugierten Ebene 16 angeordnet ist.

Zusätzlich zum ersten Lichtblatt 4.1, das hinsichtlich der Fokusebene 7 asymmetrisch ist, wird also noch ein zweites Lichtblatt 4.2 eingestrahlt. Insgesamt ergibt sich damit eine Intensitätsverteilung, wie sie schematisch in Fig. 7 dargestellt ist. Die zwei Lichtblätter haben Intensitätsverteilungen 17.1 bzw. 17.2, jeweils mit einem Maximum 18.1 und 18.2. Die Intensitätsverteilung 17.2 des zweiten Lichtblattes ist dabei gestrichelt gezeichnet, um sie von der Intensitätsverteilung 17.1 zu unterscheiden. Die gesamte Intensitätsverteilung der beiden Lichtblätter 4.1 und 4.2 zusammen ist wiederum asymmetrisch zur Fokusebene 7. Es entsteht somit ebenfalls eine asymmetrische PSF, die eine eindeutige axiale Lokalisierung und damit die 3D-Lokalisierungsmikroskopie erreicht. Der erfasste Tiefenbereich ist jedoch größer. In einer bevorzugten Abbildung stoßen die Lichtblätter nahtlos aneinander. Dies ist dadurch erreicht, dass beide Lichtblätter gegenüber einer nicht mit der Fokusebene 7 zusammenfallenden Ebene axial versetzt sind, wobei der Versatz jeweils der halben Dicke des entsprechenden Lichtblattes entspricht.

Die in Fig. 6 realisierte Asymmetrie der PSF kann in einer alternativen Ausgestaltung auch dadurch erreicht werden, dass nur ein Lichtblatt eingestrahlt wird, das zur Fokusebene 7 asymmetrisch ist, und gleichzeitig man mit zwei gegenüberliegenden Objektiven 3 und Detektionseinrichtungen 6 beobachtet. Eines der beiden Detektionsobjektive 3 ist dabei auf die Ebene des Lichtblattes fokussiert, das andere axial versetzt dazu. Dieser technisch aufwendigere Aufbau hat den zusätzlichen Vorteil, dass die Photonenausbeute erhöht wird, da Photonen, die normalerweise von der Detektionseinrichtung 6 nicht detektiert werden könnten, weil sie in die entgegengesetzte Richtung ausgesendet werden, nun vom anderen Detektionsobjektiv aufgesammelt werden.

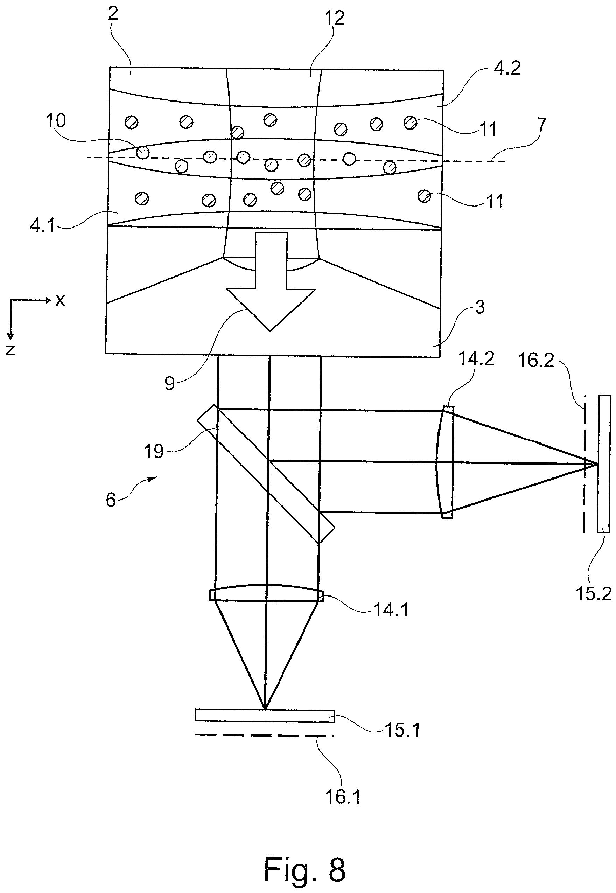

Fig. 8 zeigt eine alternative Ausgestaltung des Mikroskops 1, das wiederum mit zwei Lichtblättern 4.1 und 4.2 arbeitet, die nun jedoch symmetrisch zueinander liegen. Das erste Lichtblatt 4.1 wie auch das zweite Lichtblatt 4.2 sind jeweils für sich asymmetrisch zur Fokusebene 7. Für diesen Aufbau ist es erforderlich, zwei Detektoren 15.1 und 15.2 vorzusehen, die in entgegengesetzte Richtungen zu Ebenen 16.1 bzw. 16.2 versetzt sind, welche zur Fokusebene 7 konjugiert sind. Eine Möglichkeit, solche Detektoren vorzusehen liegt darin, den Strahlengang vom Objektiv 3, der bevorzugt als Unendlichstrahlengang ausgebildet ist, mittels eines 1:1-Strahlteilers 19 aufzuteilen und zwei Tubuslinsen 14.1, 14.2 zu verwenden, welche die Strahlung in die konjugierte Ebene 16.1 bzw. 16.2 bündeln.

Der Versatz der Detektoren 15.1 und 15.2 gegenüber den konjugierten Ebenen 16.1 und 16.2 entspricht exakt dem Versatz des Zentrums der Lichtblätter 4.1 bzw. 4.2 gegenüber der Fokusebene 7. Jedes der asymmetrisch zur Fokusebene 7 des Objektivs 3 liegenden Lichtblätter 4.1 und 4.2 erzeugt eine asymmetrische PSF. Durch die entsprechende Ausrichtung der Detektoren 15.1 und 15.2 zur konjugierten Ebene 16.1 und 16.2 ist eine eindeutige axiale Lokalisierung möglich. Der axial erfasste Bereich ist damit wie bei der Bauweise der Fig. 6 erhöht.

Die Intensitätsverteilung der Lichtblätter 4.1 und 4.2 ist in Fig. 9 gezeigt. Man sieht, dass sowohl für das erste Lichtblatt 4.1 die Intensitätsverteilung 17.1 asymmetrisch ist, als auch für das zweite Lichtblatt 4.2, deren Intensitätsverteilung 17.2 in Fig. 9 gestrichelt eingetragen ist. Die Maxima 18.1 bzw. 18.2 liegen jeweils außerhalb der Fokusebene 7. Wie bei der Bauweise der Fig. 6, deren Intensitätsverteilung Fig. 7 zeigt, ist der axial auflösbare Bereich vergrößert.

Der Aufbau der Fig. 8 hat den Nachteil, dass die vom Objektiv 3 aufgesammelte Strahlung durch den Strahlteiler 19 in zwei Teile zerlegt wird, so dass pro Detektor 15.1, 15.2 nur die Hälfte der Photonenzahl zur Bilderzeugung genutzt werden kann. Ein schlechteres Signal/Rausch-Verhältnis ist die Folge. Damit ergibt sich eine geringere Lokalisierungsgenauigkeit. Dieser Nachteil kann in einer Weiterbildung ausgeglichen werden, die zwei gegenüberliegende Detektionsobjektive 3 aufweist. In diesem Fall wird kein Strahlteiler benötigt, jedoch zwei komplette Detektionsstrahlengänge.

Das Prinzip der mehreren Lichtblätter gemäß Fig. 6 oder 8 lässt sich natürlich auf drei, vier oder mehr Lichtblätter erweitern. Damit steigt gegebenenfalls die Anzahl der erforderlichen Detektoren, wenn der Aufbau der Fig. 8 verwendet wird. Zudem kommt mit jedem weiteren Detektor ein Strahlteiler sowie eine Tubuslinse hinzu.

Bei der Verwendung weiterer Lichtblätter, d. h. mehrerer Lichtblätter zusätzlich zum ersten Lichtblatt 4.1, müssen die weiteren Lichtblätter natürlich nicht die gleiche Dicke haben und insbesondere nicht die gleiche Dicke, wie das erste Lichtblatt.

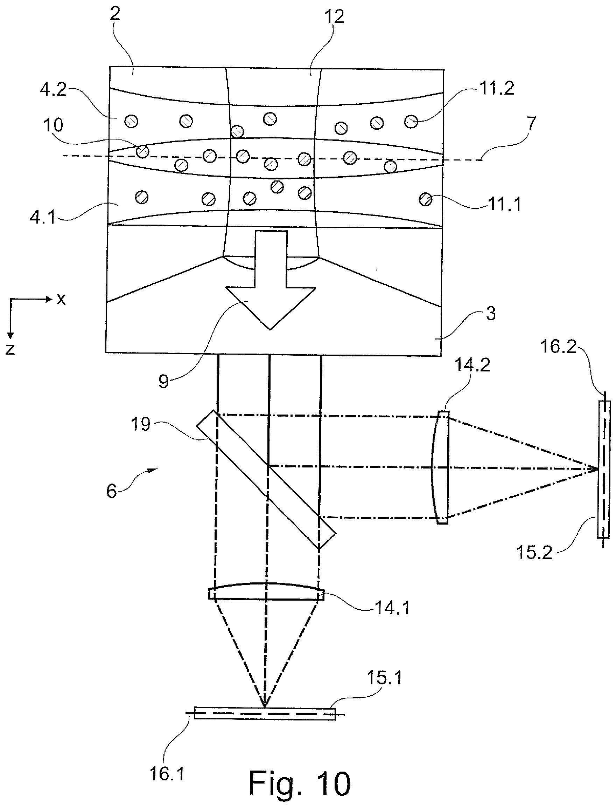

Neben den beschriebenen biometrischen Möglichkeiten, eine asymmetrische PSF durch geeignete Lichtblattbeleuchtung zu erzeugen, besteht in einer weiteren Ausführungsform die Möglichkeit, zusätzlich die Detektions-/Anregungswellenlänge geeignet zur Symmetriebrechung zu verwenden. Man kann die Probe mit zwei jeweils asymmetrisch zur Fokusebene 7 angeordneten Lichtblätter 4.1 und 4.2 beleuchten, wie dies in Fig. 10 dargestellt ist. Wiederum wird die Probe 2 mit zwei asymmetrischen Lichtblättern 4.1 und 4.2 beleuchtet, die sich jedoch hinsichtlich ihrer Wellenlänge nun unterscheiden und damit spektral unterschiedliche Fluoreszenzen in der Probe 2 anregen. Voraussetzung ist hierfür, dass die Probe 2 mit zwei unterschiedlichen Spezies an Fluoreszenzmarkern markiert ist, die sich hinsichtlich ihrer Fluoreszenzeigenschaft unterscheiden. Alternativ kann auch ein und derselbe Fluoreszenzmarker verwendet werden, wenn er spektral unterschiedlich angeregt auch spektral unterschiedlich Fluoreszenzstrahlung emittiert. Die Fig. 10 unterscheidet diese unterschiedlichen Fluoreszenzmarker bzw. die unterschiedlich angeregten Fluoreszenzmarker durch das Suffix .1 bzw. .2 entsprechend der hier allgemein in der Beschreibung vorgenommenen Bezeichnungssystematik. Die leuchtenden Fluoreszenzmarker 11.1 entstehen unter Beleuchtung durch das Lichtblatt 4.1, die leuchtenden Fluoreszenzmarker 11.2 unter Beleuchtung durch das Lichtblatt 4.2. Nach der Abbildung durch das Objektiv 3 wird die Strahlung durch einen Strahlteiler 19 aufgeteilt, der nun dichroitisch ausgebildet ist, entsprechend dem Spektrum der leuchtenden Fluoreszenzmarker 11.1 und 11.2.

Beide Lichtblätter 4.1 und 4.2 erzeugen jeweils eine asymmetrische PSF. Die Zuordnung erfolgt durch die Wellenlänge, so dass der Tiefenbereich insgesamt gegenüber der Verwendung eines Lichtblattes wieder verdoppelt ist.

In den hier beschriebenen Ausführungsformen ist davon ausgegangen, dass die Intensitätsverteilung der Lichtblätter so ist, dass die Lichtblätter im wesentlichen parallel zur Fokusebene 7 eingestrahlt werden. Dies ist natürlich nicht zwingend erforderlich. Hierbei wird man zweckmäßigerweise auf die Ebene des Maximums 18 der Intensitätsverteilung 17 des jeweiligen Lichtblattes bezug nehmen. Diese Ebene, in der das Maximum 18 liegt, muss jedoch nicht zwingend parallel zur Fokusebene 7 liegen, sondern kann auch die Fokusebene 7 schneiden, so lange der Schnittpunkt außerhalb des Bildbereiches, den das Objektiv 3 erfasst, angeordnet ist. Bei einem solchen Aufbau ist die Asymmetrie der PSF dann von der x- und/oder y-Koordinate im jeweiligen Einzelbild abhängig. Dies ist bei der Ermittlung der Tiefenangabe selbstverständlich zu berücksichtigen.

In einigen Ausführungsformen der beschriebenen Erfindung werden mehrere Lichtblätter erzeugt. Hierfür gibt es mehrere Möglichkeiten:
Bei einer Beleuchtung von zwei Seiten, d. h. ein Lichtblatt von einer ersten Seite und ein Lichtblatt von einer zweiten Seite, kann durch unterschiedliche Spiegelstellungen der axiale Versatz der Lichtblätter leicht eingestellt werden.

Eine weitere Variante verwendet einen Strahlteiler in der Anregungseinrichtung 5. Aus dem Strahlengang wird über einen 1;1-Strahtenteifer ein Strahlteil ausgekoppelt und dann unter einem anderen Winkel bzw. einem kleinen Strahlversatz wieder in den Strahlengang eingekoppelt. Die Manipulation dieses aus- und wieder eingekoppelten Strahlteils erlaubt es, zwei Lichtblätter zu erzeugen.

Die typische Belichtungsdauer eines Detektors bei der PALM-Mikroskopie liegt zwischen 10 und 200 ms. Durch schnelles Multiplexen, beispielsweise mit einer Zeitdauer von < 1 ms, kann man eine quasi-gleichzeitige Beleuchtung mit mehreren Lichtblättern realisieren. Der Begriff der Gleichzeitigkeit der Beleuchtung ist deshalb in dieser Beschreibung auf die Detektionsdauer im Abbildungsschritt zu beziehen. Ein geeignet schnelles Umschalten zur quasi-gleichzeitigen Beleuchtung kann mittels Galvanometerscannern, Resonanzscannern, MEMS-Scannern oder akustooptischen Deflektoren (AOD) erreicht werden. Der Vorteil dieses quasi-gleichzeitigen Beleuchten hat den Vorteil, dass die Intensität der beiden Lichtblätter automatisch gleich hell ist, bzw. über die Zeitdauer der jeweiligen Beleuchtungsstellung eingestellt werden kann.

Mit Hilfe eines akustooptisch-einstellbaren Filters (AOTF) sowie eines Scanners kann eine strukturierte Beleuchtung in axialer Richtung, d. h. mehr als ein Lichtblatt realisiert werden. Das Lichtblatt wird kontinuierlich in axialer Richtung gescannt, gleichzeitig wird die Intensität mit Hilfe des Filters moduliert, z. B. sinusförmig. Auf diese Weise generiert man eine streifenförmige Beleuchtung in axialer Richtung. Der Abstand der Streifen und damit der Lichtblätter wird über die Modulationsfrequenz gesteuert. Alle Lichtblätter sind gleich hell und der Abstand der Lichtblätter, d. h. der Streifenabstand lässt sich sehr präzise einstellen. Man kann beliebig viele Lichtblätter auf diese Weise erzeugen, die bevorzugt äquidistant zueinander liegen.

In einer weiteren Variante wird linear polarisiertes Licht mit Hilfe eines doppelbrechenden Kristalls gleichmäßig geteilt. Die Teilung kann über den Einfallswinkel gut kontrolliert werden. Auf diese Weise kann man mit einem Kristall zwei Lichtblätter erzeugen. Durch die Verwendung mehrerer doppelbrechender Kristalle kann eine beliebige gerade Anzahl von Lichtblättern bereitgestellt werden.

Eine weitere Variante verwendet einen Segmentspiegel. Die jeweiligen Spiegelsegmente sind nicht parallel angeordnet, sondern stehen in einem kleinen Winkel zueinander. Eine geeignete Abbildungsoptik erzeugt zwei räumlich getrennte Strahlen. Der Winkel der Spiegelsegmente bestimmt zusammen mit der Abbildungsoptik das Maß der räumlichen Trennung der Lichtblätter in axialer Richtung. Auf diese Weise kann man auch beliebig kleine Abstände der Lichtblätter stabil bereitstellen. Motorisierte Spiegelelemente, die eine Winkeländerung der einzelnen Spiegelsegmente und damit eine Einstellung des axialen Versatzes der Lichtblätter erlaubt, sind im Stand der Technik, beispielsweise der Astronomie und der adaptiven Optik bekannt.

Durch geeignete polarisationsabhängige Strahlteiler kann man in Kombination mit einer Lambda/2-Platte mittlere Lichtblätter erzeugen, wobei der Austrittswinkel der Lichtblätter von der Art des Strahlteilers abhängt.

In einer weiteren Variante wird mit einem Spatial Light Modulator im Beleuchtungsstrahlengang die Phase und Amplitude des Strahlengangs manipuliert. Durch Einstellung einer komplexen Amplitudenverteilung werden mehrere Lichtblätter erzeugt. Ebenso ist in einer Weiterbildung ein Scannen der Lichtblätter in alle Raumrichtungen vorgesehen.

In einer weiteren Variante werden zwei geteilte Phasenplatten, die zueinander einen Phasensprung um 90° haben, ein Doppellichtblatt erzeugt.

## Patentansprüche

1. Verfahren zur 3D-hochauflösenden Lokalisierungsmikroskopie, bei dem
- in einem Anregungsschritt eine Probe (2) mit Anregungsstrahlung (4) beleuchtet wird, um in der Probe (2) Fluoreszenzmarker zum Leuchten anzuregen,
- in einem Abbildungsschritt die Probe (2) mittels einer Abbildungsoptik (3, 14) längs einer Abbildungsrichtung (9) in ein Einzelbild abgebildet wird, wobei das Einzelbild Abbilder der leuchtenden Fluoreszenzmarker (11) enthält und die Abbildungsoptik (3) eine Fokusebene (7) und eine optische Auflösung aufweist,
- der Anregungs- und der Abbildungsschritt mehrmals wiederholt werden und so mehrere Einzelbilder erzeugt werden, wobei die Anregungsschritte so ausgeführt werden, dass zumindest für einen Teil der leuchtenden Fluoreszenzmarker (11) deren Abbilder in jedem der Einzelbilder isoliert sind,
- in den erzeugten, mehreren Einzelbildern aus den isolierten Abbildern der leuchtenden Fluoreszenzmarker (11) jeweils eine Ortsangabe des entsprechenden Fluoreszenzmarkers ermittelt wird, die eine Genauigkeit hat, welche über die optische Auflösung hinausgeht,
- aus den so ermittelten Ortsangaben ein hochaufgelöstes Gesamtbild erzeugt wird,
**dadurch gekennzeichnet, dass**
- die Anregungsstrahlung in die Probe (2) als ein erstes Lichtblatt (4, 4.1) eingestrahlt wird, das längs der Abbildungsrichtung (9) eine Intensitätsverteilung (17, 17.1) hat, die zur Fokusebene (7) asymmetrisch ist, und
- in den Einzelbildern die isolierten Abbilder der leuchtenden Fluoreszenzmarker (11) hinsichtlich ihrer Umrissform (13) analysiert werden und aus der Umrissform (13) eine Angabe über den Abstand des entsprechenden Fluoreszenzmarkers (11) von der Fokusebene (7) abgeleitet wird.

2. Verfahren nach Anspruch 1, **dadurch gekennzeichnet, dass** im Abbildungsschritt die Probe (2) auf einen Detektor (15) abgebildet wird, der in einer Ebene (16) liegt, welche zur Fokusebene (7) konjugiert ist.

3. Verfahren nach einem der obigen Ansprüche, **dadurch gekennzeichnet, dass** die Intensitätsverteilung (17, 17.1) ein Maximum (18, 18.1) hat, das außerhalb der Fokusebene (7) liegt.

4. Verfahren nach einem der obigen Ansprüche, **dadurch gekennzeichnet, dass** ein zweites Lichtblatt (4.2) eingestrahlt wird, das mit dem ersten Lichtblatt (4.1) nicht überlappt.

5. Verfahren nach Anspruch 4, **dadurch gekennzeichnet, dass** das zweite Lichtblatt (4.2) bezogen auf die Fokusebene (7) symmetrisch zum ersten Lichtblatt (4.1) liegt und dass im Abbildungsschritt die Probe (2) auf zwei Detektoren (15.1, 15.2) abgebildet wird, von denen der eine vor einer Ebene (16.1) liegt, welche zur Fokusebene (7) konjugiert ist, und der andere hinter einer Ebene (16.2) liegt, welche zur Fokusebene (7) konjugiert ist.

6. Verfahren nach Anspruch 4 oder 5, **dadurch gekennzeichnet, dass** sich die zwei Lichtblätter (4.1, 4.2) hinsichtlich des Wellenlängenspektrums voneinander unterscheiden.

7. Verfahren nach einem der Ansprüche 1 bis 3, **dadurch gekennzeichnet, dass** ein zweites Lichtblatt (4.2) eingestrahlt wird, dessen Intensitätsverteilung (17.2) symmetrisch zur Fokusebene (7) ist.

8. Verfahren nach einem der Ansprüche 1 bis 3, **dadurch gekennzeichnet, dass** mindestens ein zweites Lichtblatt (4.2) eingestrahlt wird, wobei die Lichtblätter (4.1, 4.2) in Abbildungsrichtung um eine halbe Lichtblattdicke gegeneinander versetzt sind.

## Claims

1. Method for 3D high-resolution localization microscopy, in which,
- in an excitation step, a specimen (2) is illuminated with excitation radiation (4) to excite fluorescent markers in the specimen (2) to emit light,
- in an imaging step, the specimen (2) is imaged into an individual image along an imaging direction (9) by means of an imaging optical unit (3, 14), wherein the individual image contains imaged presentations of the luminous fluorescent markers (11) and the imaging optical unit (3) has a focal plane (7) and an optical resolution,
- the excitation step and the imaging step are repeated multiple times and in this way a plurality of individual images are generated, wherein the excitation steps are performed such that at least for some of the luminous fluorescent markers (11) the imaged presentations thereof are isolated in each of the individual images,
- in the generated plurality of individual images, in each case a location indication of the corresponding fluorescent marker is ascertained from the isolated imaged presentations of the luminous fluorescent markers (11), the location indication having an accuracy going beyond the optical resolution,
- a high-resolution overall image is generated from the location indications thus ascertained,
**characterized in that**
- the excitation radiation is radiated as a first light sheet (4, 4.1), which has an intensity distribution (17, 17.1) along the imaging direction (9) that is asymmetric with respect to the focal plane (7), into the specimen (2), and
- in the individual images, the isolated imaged presentations of the luminous fluorescent markers (11) are analysed with respect to their outline shape (13) and an indication relating to the distance of the corresponding fluorescent marker (11) from the focal plane (7) is derived from the outline shape (13).

2. Method according to Claim 1, **characterized in that**, in the imaging step, the specimen (2) is imaged onto a detector (15) located in a plane (16) that is conjugate to the focal plane (7).

3. Method according to either of the above claims, **characterized in that** the intensity distribution (17, 17.1) has a maximum (18, 18.1) located outside the focal plane (7).

4. Method according to one of the above claims, **characterized in that** a second light sheet (4.2), which does not overlap the first light sheet (4.1), is radiated in.

5. Method according to Claim 4, **characterized in that**, with reference to the focal plane (7), the second light sheet (4.2) lies symmetrically with respect to the first light sheet (4.1) and **in that**, in the imaging step, the specimen (2) is imaged onto two detectors (15.1, 15.2), of which one lies upstream of a plane (16.1) that is conjugate to the focal plane (7) and of which the other lies downstream of a plane (16.2) that is conjugate to the focal plane (7).

6. Method according to Claim 4 or 5, **characterized in that** the two light sheets (4.1, 4.2) differ from each other in terms of the wavelength spectrum.

7. Method according to one of Claims 1 to 3, **characterized in that** a second light sheet (4.2) having an intensity distribution (17.2) that is symmetric with respect to the focal plane (7) is radiated in.

8. Method according to one of Claims 1 to 3, **characterized in that** at least a second light sheet (4.2) is radiated in, wherein the light sheets (4.1, 4.2) are offset relative to one another in the imaging direction by half a light sheet thickness.

## Revendications

1. Procédé de microscopie de localisation à haute résolution 3D, dans lequel
- dans une étape d'excitation, un échantillon (2) est illuminé avec un rayonnement d'excitation (4) afin d'exciter des marqueurs de fluorescence dans l'échantillon (2) pour effectuer l'illumination,
- dans une étape de reproduction, l'échantillon (2) est reproduit en une image individuelle à l'aide d'une optique de reproduction (3, 14) dans une direction de reproduction (9), l'image individuelle contenant des reproductions des marqueurs à fluorescence lumineux (11) et l'optique de reproduction (3) présentant un plan focal (7) et une résolution optique,
- l'étape d'excitation et de reproduction est répétée plusieurs fois et plusieurs images individuelles sont ainsi générées, les étapes d'excitation étant réalisées de telle manière que, au moins pour une partie des marqueurs à fluorescence lumineux (11), leurs reproductions soient isolées dans chacune des images individuelles,
- dans la pluralité d'images individuelles générées, une donnée de localisation du marqueur à fluorescence correspondant, qui a une précision qui va au-delà de la résolution optique, est déterminée à partir des reproductions isolées des marqueurs à fluorescence lumineux (11),
- une image complète à haute résolution est générée à partir des données de localisation ainsi déterminées, **caractérisé en ce que**
- le rayonnement d'excitation est injecté dans l'échantillon (2) sous la forme d'une première nappe de lumière (4, 4.1) qui présente le long de la direction de reproduction (9) une distribution d'intensité (17, 17.1) qui est asymétrique par rapport au plan focal (7), et
- dans les images individuelles, les reproductions isolées des marqueurs à fluorescence lumineux (11) sont analysées quant à leur forme de contour (13) et une donnée relative à la distance du marqueur à fluorescence correspondant (11) par rapport au plan focal (7) est dérivé de la forme de contour (13).

2. Procédé selon la revendication 1, **caractérisé en ce que**, à l'étape de reproduction, l'échantillon (2) est reproduit sur un détecteur (15) qui est situé dans un plan (16) qui est conjugué au plan focal (7).

3. Procédé selon l'une des revendications précédentes, **caractérisé en ce que** la distribution d'intensité (17, 17.1) présente un maximum (18, 18.1) qui est situé à l'extérieur du plan focal (7).

4. Procédé selon l'une des revendications précédentes, **caractérisé en ce qu'**une deuxième nappe de lumière (4.2) est injectée qui ne chevauche pas la première nappe de lumière (4.1).

5. Procédé selon la revendication 4, **caractérisé en ce que** la deuxième nappe de lumière (4.2) est symétrique de la première nappe de lumière (4.1) par rapport au plan focal (7) et **en ce que**, à l'étape de reproduction, l'échantillon (2) est reproduit sur deux détecteurs (15.1, 15.2) dont l'un est situé devant un plan (16.1) qui est conjugué au plan focal (7) et l'autre est situé derrière un plan (16.2) qui est conjugué au plan focal (7) .

6. Procédé selon la revendication 4 ou 5, **caractérisé en ce que** les deux nappes de lumière (4.1, 4.2) diffèrent l'une de l'autre quant au spectre de longueurs d'onde.

7. Procédé selon l'une des revendications 1 à 3, **caractérisé en ce qu'**une deuxième nappe de lumière (4.2) est injectée dont la distribution d'intensité (17.2) est symétrique par rapport au plan focal (7).

8. Procédé selon l'une des revendications 1 à 3, **caractérisé en ce qu'**au moins une deuxième nappe de lumière (4.2) est injectée, les nappes de lumière (4.1, 4.2) étant décalées les unes par rapport aux autres d'une demi-épaisseur de nappe de lumière dans la direction de reproduction.
